# EUROPÄISCHE PATENTSCHRIFT

(11) **EP 3 154 812 B1**
(45) Veröffentlichungstag und Bekanntmachung des Hinweises auf die Patenterteilung: **09.12.2020**
(21) Anmeldenummer: 15723860.1
(22) Anmeldetag: 05.05.2015
(51) Int. Cl.: B60K 37/06, G06F 3/0482

(54) **VERFAHREN ZUR ANSTEUERUNG EINES KRAFTFAHRZEUG-KOMFORTSYSTEMS**
METHOD FOR CONTROLLING A MOTOR VEHICLE COMFORT SYSTEM
PROCÉDÉ DE COMMANDE D'UN SYSTÈME DE CONFORT DE VÉHICULE AUTOMOBILE

(30) Priorität: 13.06.2014 DE 102014211340
(43) Veröffentlichungstag der Anmeldung: 19.04.2017
(73) Patentinhaber: Volkswagen Aktiengesellschaft, 38440 Wolfsburg (DE)
(72) Erfinder: KÖGLER, Indra-Lena, 10829 Berlin (DE); KUHN, Mathias, 14129 Berlin (DE); CHUDZINSKI, Filip, Piotr, 10557 Berlin (DE); PETERSEN, Sönke, 12205 Berlin (DE); YOSHA, Omer, 10827 Berlin (DE); HAHN, Alexander, 38104 Braunschweig (DE)
(86) Internationale Anmeldenummer: PCT/EP2015/059788
(87) Internationale Veröffentlichungsnummer: WO 2015/188981

(56) Entgegenhaltungen:
- WO-A1-2013/104378
- DE-A1-102007 039 442
- GB-A- 2 434 068

## Beschreibung

Die Erfindung betrifft ein Verfahren zur Ansteuerung eines Kraftfahrzeug-Komfortsystems mit den Merkmalen vom Oberbegriff des Patentanspruchs 1.

Aus dem allgemeinen Stand der Technik sind vielfältige Verfahren zur Ansteuerung von Kraftfahrzeug-Komfortsystemen bekannt. Unter anderem ist es bekannt, Komfortsysteme durch Berührung einer dem Komfortsystem zugeordneten, berührungsempfindlichen Anzeige- und Bedienfläche, beispielsweise in Form eines Touchscreens anzusteuern. Beispielsweise können durch Berührung bestimmter Bereiche, diesen Bereichen zugeordnete Funktionen durchgeführt werden. Eine solche Funktion kann beispielsweise das Abspielen bzw. die Auswahl eines bestimmten Radiosenders sein.

Es können eine Vielzahl von durch Berührung auswählbare Funktionen auf einer berührungsempfindlichen Anzeige- und Bedienfläche angeordnet sein. Zuweilen ist es auch erforderlich, dass sich ein Bediener mühsam durch Bedienebenen eines Bedienmenüs durchhangeln muss, bis er zur gewünschten Funktion gelangt. Diese erfordert zum Teil ungebührlich viel Aufmerksamkeit für den Bediener.

Aus einer auf dem Markt befindlichen, herunterladbaren Software-Applikation eines Smartphone-Herstellers (siehe http://www.weathercube.com) ist es bekannt, Wetterdaten auf einem als Würfel ausgebildeten, virtuellen Körper zu präsentieren. Der Würfel ist um eine horizontale und eine vertikale Achse drehbar. Ferner ist der Würfel in viele einzelne Bereiche unterteilt, welche zum Teil auch einzeln drehbar sind.

Die GB 2 434 068 A beschreibt eine Bedieneinrichtung, die als Touchscreen ausgebildet und zur Bedienung eines Navigationssystems, eines Radios oder eines anderen elektronischen Systems dienen kann. Auf der Bedieneinrichtung ist als grafische Benutzerschnittstelle (GUI) ein dreidimensionaler Körper ersichtlich, mit dem Funktionen auswählbar sind. Insbesondere wird als GUI ein dreidimensionaler Körper vorgeschlagen, der um eine horizontale und um eine vertikale Achse drehbar ist. Dabei sind durch Drehung des Körpers um die vertikale Achse unterschiedliche Frequenzbänder mit konkreten Sendefrequenzen auswählbar. Durch Drehung des Körpers um die horizontale Achse können innerhalb eines bestimmten Frequenzbandes unterschiedliche Sendefrequenzen ausgewählt werden. Es wird auch vorgeschlagen, auf der Bedieneinrichtung mehrere dreidimensionale Körper anzuordnen, die konzentrisch zueinander ausgerichtet oder zueinander beabstandet sind. Ein Benutzer kann dann zwischen den Körpern navigieren, um unterschiedliche Funktionen zu bedienen.

Aus der DE 10 2007 039442 A1 ist Verfahren zum Anzeigen von Informationen in einem Fahrzeug bekannt, bei dem mehrere Objekte mittels eines im Kraftfahrzeug befestigten Displays grafisch dargestellt werden. Jedem Objekt ist eine bedienbare Einrichtung des Kraftfahrzeugs bzw. eine bedienbare Funktion zugeordnet. Ein Objekt kann beispielsweise die Steuerung einer Klimaeinrichtung, ein anderes die Steuerung einer Musikwiedergabeeinrichtung des Kraftfahrzeugs ermöglichen.
Die Objekte sind auf einem virtuellen, perspektivisch dargestellten Ring angeordnet. Zur Auswahl eines Objektes bzw. einer Funktion können die Objekte auf dem Ring karussellartig gedreht werden. Nach einem karusellartigen Drehen der Objekte wird das im Vordergrund dargestellte Objekt nach Anlauf eines Zeitintervalls automatisch aktiviert, wobei der virtuelle Ring ausgeblendet und nur noch das aktivierte Objekt vergrößert dargestellt wird. Die Anzeige auf dem Display kann durch Berührung des Displays oder auch durch eine Gestensteuerung erfolgen.

Schließlich ist der WO 2013/104378 A1 ein Verfahren zum Erzeugen einer 3D-Darstellung einer Benutzeroberfläche in einem Fahrzeug zu entnehmen. Bei dem Verfahren werden zum Teil bewegte Szenen auf einer Benutzeroberfläche in Echtzeit gerendert, welche 3D-Objekte enthalten. Jedes 3D-Objekt dient zur Darstellung eines Menüpunktes, also zur Darstellung einer im Menü auswählbaren Funktion.

Der vorliegenden Erfindung liegt die Aufgabe zu Grunde, ein Verfahren mit den Merkmalen vom Oberbegriff des Patentanspruchs 1 derart weiterzubilden, dass das Verfahren ein einfaches und intuitives Bedienen eines Kraftfahrzeug-Komfortsystems ermöglicht.

Diese Aufgabe wird mit den kennzeichnenden Merkmalen von Patentanspruch 1 gelöst. Vorteilhafte Ausführungen beziehungsweise Weiterbildungen der Erfindung sind den jeweiligen Unteransprüchen entnehmbar.

Die Erfindung geht aus von einem Verfahren zur Ansteuerung eines Kraftfahrzeug-Komfortsystems, wobei die Ansteuerung mit Hilfe einer dem Komfortsystem zugeordneten, berührungsempfindlichen Anzeige- und Bedienfläche erfolgt.

Es wird auch vorgeschlagen, dass in wenigstens einem Betriebsmodus auf der berührungsempfindlichen Anzeige- und Bedienfläche die virtuelle Darstellung wenigstens eines dreidimensional anmutenden Körpers in einer ersten Position erzeugt und auf dessen sichtbarer Oberfläche wenigstens eine vom Komfortsystem durchführbare Funktion dargestellt wird. Der Körper kann nur als Ganzes gedreht werden. Nach Drehung um eine horizontale oder vertikale Achse wird er in eine solche, andere Position bewegt, in der auf dessen sichtbarer Oberfläche wenigstens eine andere, vom Komfortsystem durchführbare Funktion dargestellt wird.

Auf diese Weise wird eine höchst einfache und intuitive Bedienung des Komfortsystems ermöglicht. Gewünschte Funktionen können schnell und unkompliziert erreicht werden.

Die Ausbildung des dreidimensional anmutenden Körpers kann sehr unterschiedlich sein. Eine würfelartige Ausbildung hat sich als vorteilhaft erwiesen, ist jedoch keinesfalls zwingend. Es sind auch andere Ausbildungen, beispielsweise eine zylindrische oder eine kugelförmige Ausbildung denkbar.

Der Begriff "Komfortsystem" soll dabei durchaus weit verstanden werden und kann in Kraftfahrzeugen vorzufindende Systeme, wie beispielsweise Audio-, Kommunikations-, Klima- und Navigationssysteme einschließen. Die Aufzählung ist nur beispielhaft.

Die sich daraus ergebenden, durchführbaren Funktionen sind vielfältig. Diese können, beispielhaft und nicht abschließend genannt, folgende sein:
- Abspielen eines bestimmten Musiktitels aus einem bestimmten Musikalbum
- Abspielen eines bestimmten Radiosenders
- Einstellung einer bestimmten Temperatur
- Einstellung einer bestimmten Lüfterstufe (Gebläsedrehzahl)
- Einstellung einer bestimmten Luftverteilung (oben, unten, rechts, links)
- Auswahl eines bestimmten Kontakteintrags aus einem Adressbuch
- usw.

Das Vorhandensein einer berührungsempfindlichen Anzeige- und Bedienfläche muss nicht unbedingt bedeuten, dass eine Bedienung ausschließlich über eine Berührung der Anzeige- und Bedienfläche möglich ist. Eine Bedienung ist auch kontaktlos vorstellbar bei ausreichend dichtem Abstand zur Bedienfläche, beispielsweise durch Einsatz von kapazitiven Sensoren oder dergleichen.

Gemäß einer ersten vorteilhaften Weiterbildung der Erfindung ist denkbar, dass nach Darstellung des Körpers in einer bestimmten Position oder nach dem Bewegen des Körpers in eine solche, das Komfortsystem spätestens nach einer bestimmten Zeitverzögerung automatisch derart angesteuert wird, dass die dargestellte Funktion auch durchgeführt wird.

Dadurch kann die Bedienung weiter vereinfacht werden, da ein weiterer Bedienschritt für den Bediener entfallen kann. Dennoch ist vorstellbar, dass eine dargestellte, durchführbare Funktion erst dann durchgeführt wird, wenn ein weiterer Bedienschritt vollführt wird. Dies kann beispielsweise das Antippen der dargestellten Funktion auf der Bedienfläche sein.

Im Übrigen sei erwähnt, dass die Darstellung einer Funktion ebenfalls auf vielerlei Weise denkbar ist. Dies kann vorzugsweise als Symbol oder auch als Klartext erfolgen.

Es hat sich für eine unkomplizierte Bedienung als sehr zuträglich erwiesen, wenn mit der Drehung des Körpers um eine bestimmte Achse ein bestimmter Funktionsvorrat mit einer ersten und mit einer letzten, darstellbaren Funktion verbunden wird. Dabei wird nach wiederholter Drehung des Körpers in eine bestimmte Richtung und einer damit verbundenen Darstellung der letzten oder ersten Funktion aus diesem Funktionsvorrat bei weiterer Drehung des Körpers in die gleiche Richtung wieder die erste oder letzte Funktion dargestellt. Der Körper lässt sich bei dieser Weiterbildung also unendlich drehen. Ein Manövrieren durch Funktionen wird dadurch deutlich vereinfacht.

Eine andere Weiterbildung der Erfindung schlägt vor, dass mit der Drehung des Körpers um eine erste Achse als Funktionsvorrat die Auswahl von abspielbaren Musiktiteln aus einem bestimmten Musikalbum und mit der Drehung des Körpers um eine zweite Achse die Auswahl eines abspielbaren Titel aus unterschiedlichen Musikalben zur Verfügung gestellt wird.

Als zweckmäßig hat sich dabei erwiesen, die erste Achse vertikal und die zweite Achse horizontal zu wählen.

Hierdurch wird eine Bedienung ermöglicht, die dem natürlichen Empfinden eines Bedieners entgegenkommt.

Um viele Funktionen eines Komfortsystems auf einfache Weise durchführen zu lassen, sind mehrere dreidimensional anmutende Körper beabstandet voneinander dargestellt, wobei einem oder mehreren Körpern Funktionen aus einem Funktionsbereich des Komfortsystems zugeordnet sind.
So kann beispielsweise einem oder mehreren Körpern der Funktionsbereich "Klima", einem anderen Körper oder anderen Körpern der Funktionsbereich "Audio", und so weiter, zugeordnet werden.

Gemäß der Erfindung werden einem Körper Funktionen in Abhängigkeit der Position wenigstens eines anderen Körpers zugeordnet. Auf diese Weise lässt sich die Funktionsdichte erhöhen und man benötigt auch bei hoher Funktionsvielfalt nur vergleichsweise wenig Körper.

Schließlich soll mit dieser Erfindung auch ein Kraftfahrzeug geschützt werden, mit einem Komfortsystem und wenigstens einer diesem zur Bedienung zugeordneten, berührungsempfindlichen Anzeige- und Bedienfläche. Dabei ist die Anzeige- und Bedienfläche derart ansteuerbar, dass auf dieser die virtuelle Darstellung wenigstens eines dreidimensional anmutenden Körpers erfolgt, wobei durch Drehung des Körpers um eine horizontale oder vertikale Achse mittels einer Wischgeste eine Auswahl von durchführbaren Funktionen des Komfortsystems möglich ist.

Das Komfortsystem eines solchen Kraftfahrzeugs ist leicht und intuitiv bedienbar, so dass ein Kraftfahrzeugführer bei der Bedienung des Komfortsystems geringstmöglich abgelenkt wird.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: ein erfindungsgemäßes Kraftfahrzeug mit einem Komfortsystem, welches nach dem erfindungsgemäßen Verfahren ansteuerbar ist,
- Fig. 2: die Darstellung des Komfortsystems und der diesem zugeordneten, berührungsempfindlichen Anzeige- und Bedienfläche,
- Fig. 3: die alleinige Darstellung der berührungsempfindlichen Anzeige- und Bedienfläche mit mehreren dreidimensional anmutenden Körpern,
- Fig. 4: die Darstellung eines der Körper gemäß Fig. 3, welcher dem Funktionsbereich "Audio" des Komfortsystems zugeordnet ist, bei Drehung um eine horizontale Achse,
- Fig. 5: die Darstellung des Körpers gemäß Fig. 4 bei Drehung um eine vertikale Achse,
- Fig. 6: die Darstellung des Körpers gemäß Fig. 4 bei Drehung um eine vertikale Achse, jedoch in einer Variante,
- Fig. 7: die Darstellung eines der Körper gemäß Fig. 3, welcher dem Funktionsbereich "Klima" des Komfortsystems zugeordnet ist, bei Drehung um eine vertikale und eine horizontale Achse,
- Fig. 8: die Darstellung von zweien der Körper gemäß Fig. 3, welche dem Funktionsbereich "Audio" des Komfortsystems zugeordnet sind, wobei die auf dem einen Körper dargestellten Funktionen in Abhängigkeit der Position des anderen Körpers erfolgen.

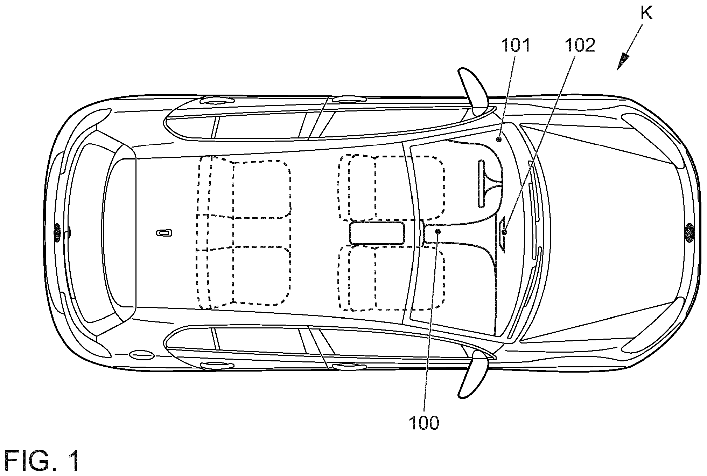

In Fig. 1 ist ein Kraftfahrzeug K ersichtlich, in dem eine Mittelkonsole 100, eine Instrumententafel 101 und eine berührungsempfindliche Anzeige- und Eingabefläche in Form eines Touchscreens 102 beziffert sind.

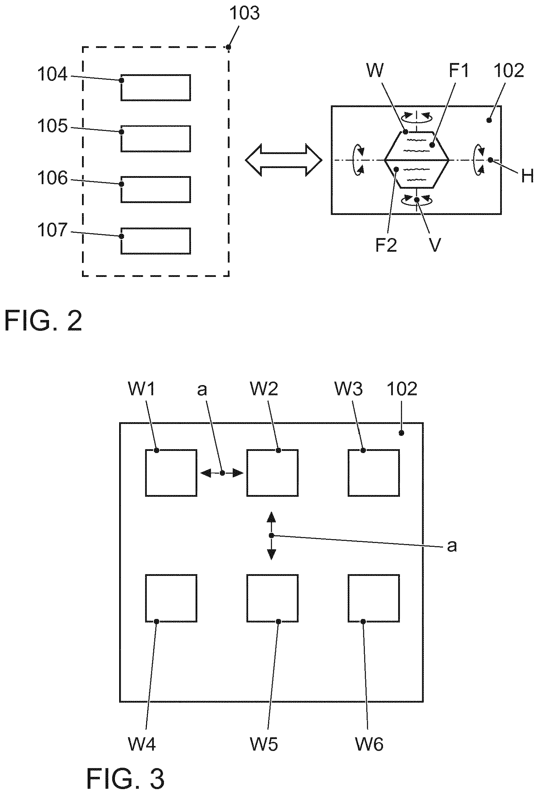

Aus Fig. 2 ist ersichtlich, dass der Touchscreen 102 einem Komfortsystem 103 zugeordnet ist. Über den Touchscreen 102 kann das Komfortsystem also angesteuert bzw. bedient werden.

Das Komfortsystem 103 umfasst im Ausführungsbeispiel vier Funktionsbereiche, und zwar die Funktionsbereiche "Audio" 104, "Klima" 105, "Kommunikation" 106 und "Navigation" 107.

Dabei sind weitere notwendige Komponenten, wie beispielsweise Speichereinheiten zum Abspeichern von MP3-Dateien, Kontakt- oder Navigationsdaten nicht dargestellt, für das Verständnis der Erfindung auch nicht vonnöten.

Andere Konfigurationen des Komfortsystems 103 mit mehr oder auch weniger Funktionsbereichen sind natürlich denkbar.

Zur Ansteuerung des Komfortsystems 103 wird auf dem Touchscreen 102 die virtuelle Darstellung wenigstens eines dreidimensional anmutenden Körpers in Form eines achtkantigen Würfels W mit entsprechend sechs Flächen F1 bis F6 erzeugt. Der Würfel W lässt sich durch horizontale oder vertikale Wischgesten eines Bedieners um eine vertikale Achse V oder eine horizontale Achse H (wie in der Figur gerade ersichtlich) drehen. Von den Flächen F1 bis F6 sind in der Figur drehungsbedingt die Flächen F1 und F2 ersichtlich.

Beim Einschalten des Touchscreens 102 wird der Würfel W standardmäßig zunächst so dargestellt, dass nur eine Fläche, beispielsweise die Fläche F1 sichtbar ist.

Auf jeder der Flächen F1 bis F6 wird wenigstens eine vom Komfortsystem 103 durchführbare Funktion dargestellt (nur durch Linie angedeutet). Durch Drehung des Würfels W um eine der Achsen V oder H kann nun, ausgehend von der Fläche F1, eine andere Fläche auf dem Touchscreen 102 sichtbar gemacht werden. Eine andere Fläche ist jedoch mit einer anderen, durchführbaren Funktion verbunden. Somit kann auf höchst einfache und intuitive Weise zwischen durchführbaren Funktionen navigiert bzw. umgeschaltet werden.

Aufgrund des möglichen Funktionsumfangs des Komfortsystems 103 werden auf dem Touchscreen 102 bevorzugt jedoch mehrere Würfel, beispielsweise sechs Würfel W1 bis W6 dargestellt, deren Funktionsweise jeweils der des Würfels W gleicht. Bei der Darstellung mehrerer Würfel sind diese zueinander beabstandet (a), wie der Fig. 3 zu entnehmen ist. Den Würfeln W1 bis W6 sind zum Teil unterschiedliche der Funktionsbereiche 104 bis 107 zugeordnet.

Im Folgenden soll im Detail erläutert werden, wie mit Hilfe der Würfel W1 bis W6, insbesondere der Würfel W1, W2 und W4 eine Ansteuerung des Komfortsystems 103 bewerkstelligt wird.

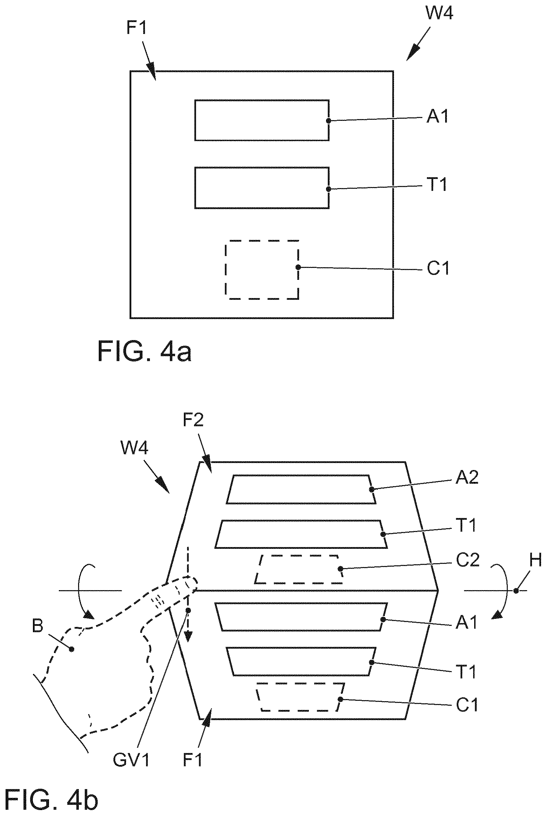

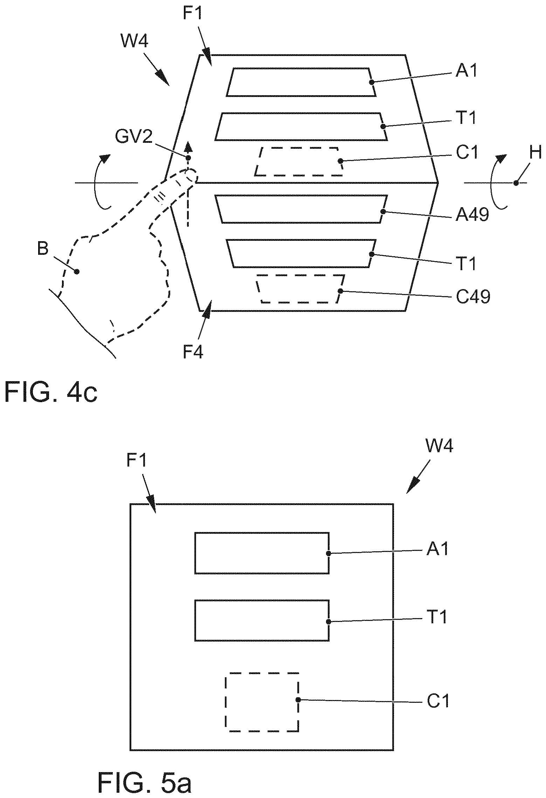

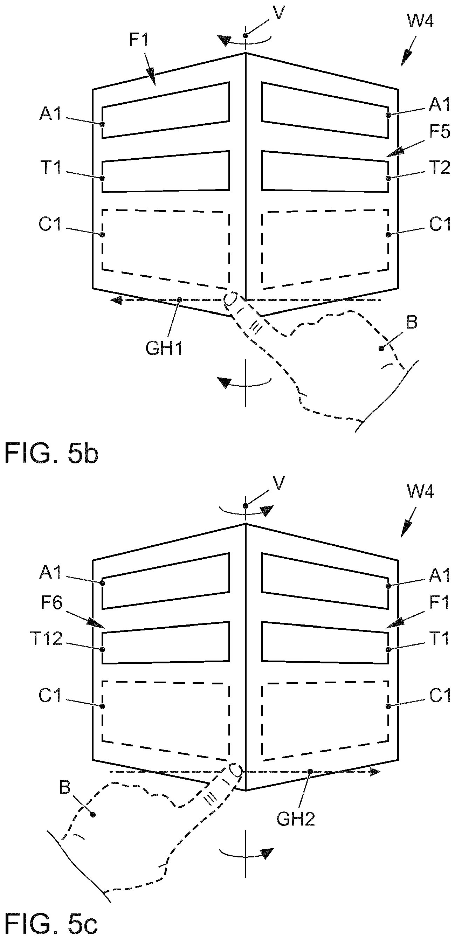

So wird anhand der Figuren 4 und 5 beschrieben, wie mittels des Würfels W4 Funktionen des Funktionsbereichs 104 "Audio" durchgeführt werden können:
In der Ausgangsposition des Würfels W4 wird auf der Fläche F1 der Name eines ersten, abgespeicherten Musikalbums A1, darunter dessen erster Titel T1 sowie ein Abbildung des zugehörigen Covers C1 dargestellt (vgl. Fig. 4a).

Mit dieser Darstellung ist also die durchführbare Funktion "Abspielen des ersten Titels T1 vom Musikalbum A1" verknüpft. Der Einfachheit halber wird im Ausführungsbeispiel nach einem bestimmten Zeitverzug von ein paar Sekunden nach erstmaliger Darstellung einer solchen, durchführbaren Funktion diese auch selbsttätig durchgeführt. Ein weiterer Bedienschritt ist für einen Bediener also nicht unbedingt notwendig. Abweichend vom Ausführungsbeispiel ist jedoch denkbar, dass zum Durchführen einer dargestellten Funktion noch ein weiterer Bedienschritt erforderlich ist. Dies kann beispielsweise das Antippen der sichtbaren Würfelfläche sein.

Wird jedoch das Abspielen von Titeln eines anderen Albums gewünscht, so kann ein Bediener B mittels einer vertikalen Wischgeste den Würfel W4 um seine horizontale Achse H drehen und dadurch ein anderes Album auswählen. Nach einer einmaligen Wischgeste dreht sich der Würfel W4 soweit, bis eine andere Fläche sichtbar ist und verharrt dann in dieser Position, bis eine neue Wischgeste erfolgt. Dies gilt für alle Würfel W1 bis W6.

Konkret gelangt ein Bediener B durch eine vertikale, abwärts gerichtete Wischgeste GV1 zur Darstellung einer anderen Fläche (F2) des Würfels W4, auf der nun das zweite vorhandene Album A2, dessen zugehöriges Cover C2 sowie dessen erster, abspielbarer Titel T1 dargestellt sind (vgl. Fig. 4b, wobei nur eine Übergangsposition dargestellt ist). Durch ein weiteres Drehen des Würfels W4 in die gleiche Richtung gelangt der Bediener B zu einem dritten Album und so weiter. Durch Fortsetzen der Drehung in die gleiche Richtung kann er folglich bis zu einem letzten Album gelangen. Dreht der Bediener B den Würfel W4 dann eine Drehung in die gleiche Richtung weiter, gelangt er wieder zum ersten Album A1. Dazu kann er auch durch eine mehrmalige Drehung in entgegengesetzte Richtung wieder zurück gelangen.

Ein Bediener B kann, ausgehend von der Darstellung gemäß Fig. 4a, durch eine vertikale, aufwärts gerichtete Wischgeste GV2 auch unmittelbar zur Darstellung einer anderen Fläche (F4) gelangen, auf der dann das letzte, verfügbare Album (im vorliegenden Fall das 49igste Album A49), dessen zugehöriges Cover C49 sowie dessen erster, abspielbarer Titel T1 dargestellt sind (vgl. Fig. 4c, wobei wiederum nur eine Übergangsposition dargestellt ist).

Durch eine "endlose" Drehung des Würfels W4 um die horizontale Achse H ist also ein komfortables Navigieren durch verfügbare Musikalben in beiden Drehrichtungen möglich.

Möchte ein Bediener B, ausgehend von der Darstellung des ersten Titels T1 eines Albums (vgl. Fig. 4a und 5a), jedoch schnell einen anderen Titel eines bestimmten Albums auswählen, so kann er durch horizontale Wischgesten leicht zwischen den Titeln eines Albums navigieren.

Durch eine horizontale Wischgeste nach links (GH1) dreht er den Würfel W4 um eine vertikale Achse V zur Fläche F5, auf der nunmehr der zweite Titel T2 des Albums A1 dargestellt wird (vgl. Fig. 5b).

Eine horizontale Wischgeste nach rechts (GH2) dreht den Würfel W4 zur Fläche F6, auf der unmittelbar der letzte Titel (hier der zwölfte Titel T12) des Albums A1 dargestellt wird (vgl. Fig. 5c).

Es ist darauf hinzuweisen, dass auch bei der Drehung des Würfels W4 um die vertikale Achse V die Bedien- und Ausführungslogik ("Endlosdrehung", selbsttätige Durchführung einer dargestellten Funktion nach einem bestimmten oder bestimmbaren Zeitverzug) analog wie bei der Drehung um die horizontale Achse H ausgebildet ist.

Erfolgt, ausgehend von der Darstellung gemäß den Fig. 4a oder 5a keine weitere Bedienung vom Bediener B, so wird zunächst der Titel T1 vom ersten Album A1 abgespielt. Danach setzt sich das Abspielen der Musiktitel bis zum letzten Musiktitel des letzten Albums A49 fort. Anschließend erfolgt erneut das Abspielen des ersten Titels T1 vom ersten Album A1. Es versteht sich von selbst, dass dabei auch die Darstellungen der Titel, der Alben sowie der Cover dynamisch auf der sichtbaren Fläche des Würfels W4 angepasst werden.

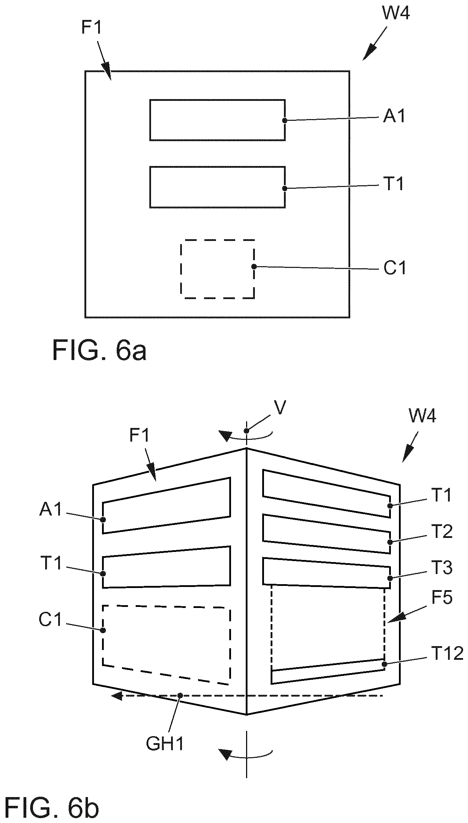

Gemäß einer in Fig. 6 dargestellten Variante kann, ausgehend von einer Darstellung des ersten Titels eines Albums (z.B. T1 aus A1, vgl. Fig. 6a), durch eine Drehung des Würfels W4 um eine vertikale Achse V mittels einer horizontalen Wischgeste GH1 eine Listendarstellung aller abspielbaren Titel eines bestimmten Albums (z.B. Titel T1 bis T12 von Album A1) generiert werden. Auch ist denkbar, dass, ausgehend von einer Darstellung des ersten Titels eines Albums, durch eine Drehung des Würfels W4 in entgegengesetzter Richtung eine Listendarstellung aller überhaupt abspielbaren Titel generiert wird, wobei die Titel vorzugsweise aufsteigend in alphabetischer Reihenfolge aufgelistet sind (nicht dargestellt).

In beiden Fällen ist dann eine schnelle Navigation durch die Titel durch vertikale Wischgesten und eine Auswahl eines Titels durch ein Antippen denkbar und zweckdienlich.

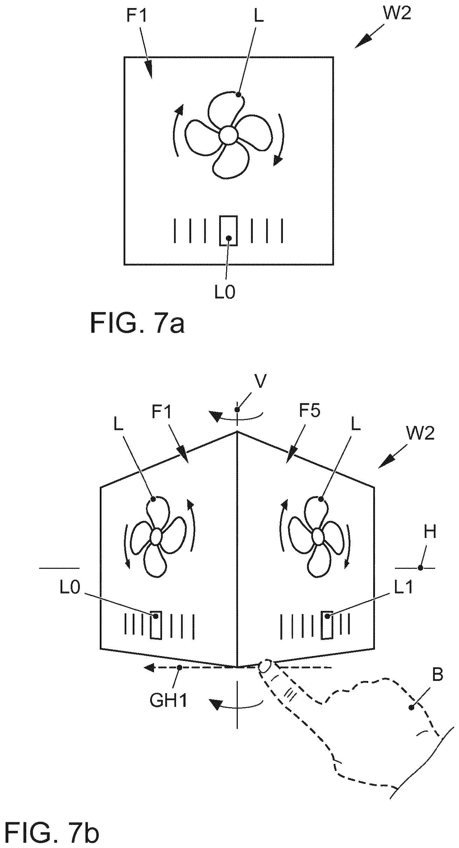

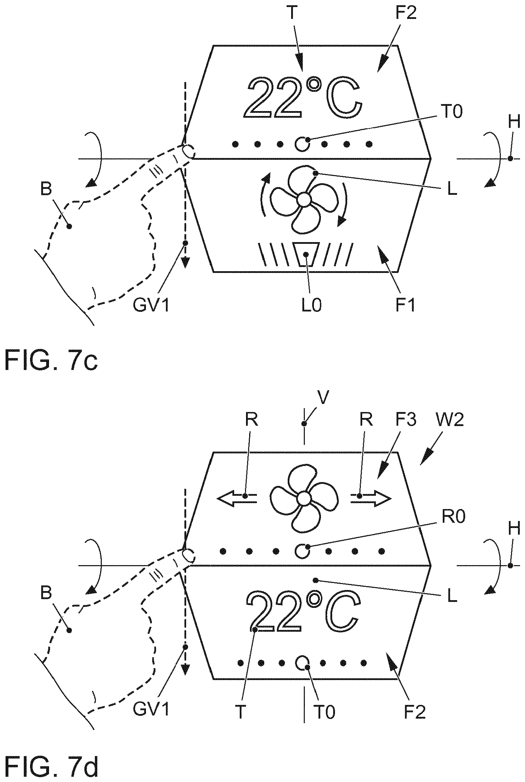

In der Fig. 7 ist der Würfel W2 näher dargestellt. Dieser ist mit dem Funktionsbereich 105 "Klima" verknüpft.

Der Würfel W2 befindet sich in einer Position, bei der seine Fläche F1 ersichtlich ist. Auf dieser werden ein Lüftersymbol L und darunter eine standardmäßig vom Komfortsystem 103 einzustellende Lüfterdrehzahl LO dargestellt (vgl. Fig. 7a).

In Analogie zur bereits beschriebenen Bedien- und Ausführungslogik kann ein Bediener B durch Drehung des Würfels W2 um seine vertikale Achse V mittels horizontaler Wischgesten (GH1) die Lüfterdrehzahl nach seinen Wünschen erhöhen (L1, vgl. Fig. 7b) oder auch reduzieren.

Durch Drehung des Würfels W2 um seine horizontale Achse H mittels vertikaler Wischgesten (GV1) kann der Bediener B entsprechend zwischen den Darstellungen von durchführbaren Funktionen "Einstellung Lüfterdrehzahl" (L, L0, L1), "Temperatureinstellung" (T, T0) sowie "Einstellung der Luftverteilung (R, R0) wechseln (vgl. Fig. 7c und d). Eine entsprechender Darstellungswechsel der durch das Komfortsystem 103 (105) durchführbaren bzw. einstellbaren Werte (niedrigere/höhere Temperatur; Luftverteilung mehr nach rechts oder links, usw.) kann dann wiederum durch Drehung des Würfels W2 um seine vertikale Achse V bewerkstelligt werden.

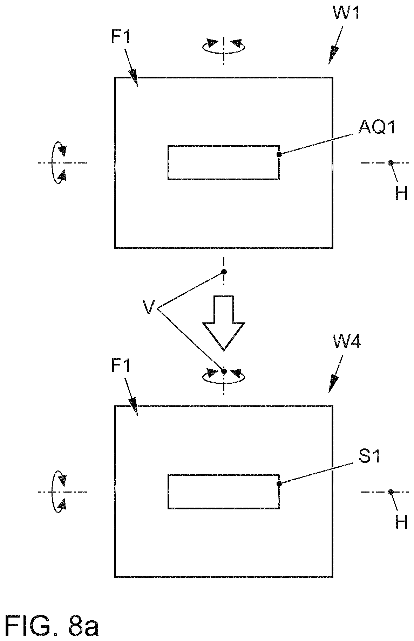

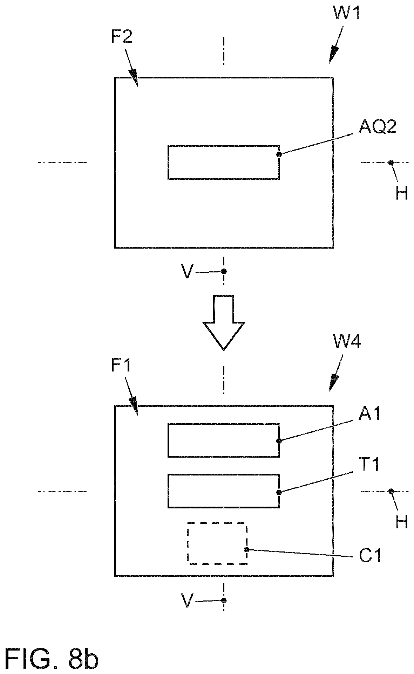

Schließlich wird anhand der Fig. 8 erläutert, dass einem Würfel auch durchführbare Funktionen in Abhängigkeit der Position wenigstens eines anderen Würfels zugeordnet werden können.

So sind der Würfel W1 und der Würfel W4 dem Funktionsbereich 104 "Audio" zugeordnet. Der Würfel W1 dient zur Auswahl von im Kraftfahrzeug K vorhandenen Audioquellen.

In der augenblicklichen Position des Würfels W1 wird auf seiner Fläche F1 eine durchführbare Funktion AQ1 "Audioquelle AQ1 auswählen" dargestellt und nach einem bestimmten Zeitverzug vom Komfortsystem 103 auch ausgewählt. Die Audioquelle AQ1 ist im Ausführungsbeispiel ein Radio.

Daher wird auf dem Würfel W4 ein auszuwählender Radiosender S1 dargestellt (vgl. Fig. 8a). Es ist dabei denkbar, dass durch Drehung des Würfels W4 um eine horizontale Achse H zwischen abgespeicherten Radiosendern navigiert werden und durch eine Drehung des Würfels W4 um eine vertikale Achse V ein Sender-Suchlauf zur nächsthöheren oder nächstniedrigeren Senderfrequenz gestartet werden kann.

In Fig. 8 b befindet sich der Würfel W1 in einer solchen Position, in der nach Drehung um eine horizontale Achse H auf seiner Fläche F2 eine durchführbare Funktion AQ2 "Audioquelle AQ2 auswählen" dargestellt und nach einem bestimmten Zeitverzug vom Komfortsystem 103 auch ausgewählt wird. Die Audioquelle AQ2 ist im Ausführungsbeispiel ein MP3-Player.

Daher wird auf dem Würfel W4 ein abspielbarer Titel T1 eines Albums A1 dargestellt. Durch Drehung des Würfels W4 um eine horizontale oder vertikale Achse (H, V) kann dann, wie bereits beschrieben, zwischen allen abspielbaren Titeln navigiert werden.

Die Erfindung ist nicht auf das bzw. die obigen Ausführungsbeispiele beschränkt. Diese wurden nur zur allgemeinen Erläuterung des Kerngedankens der Erfindung herangezogen. Hierbei kann sie insbesondere auch solche Merkmale aufweisen, die eine Kombination aus Einzelmerkmalen der jeweiligen Ansprüche darstellen.

### BEZUGSZEICHENLISTE

- 100: Mittelkonsole
- 101: Instrumententafel
- 102: Touchscreen
- 103: Komfortsystem
- 104: Funktionsbereich "Audio"
- 105: Funktionsbereich "Klima"
- 106: Funktionsbereich "Kommunikation"
- 107: Funktionsbereich "Navigation"

- a: Abstand zwischen den Würfeln
- A1: erstes abgespeicherte Album
- A2: zweites abgespeicherte Album
- A49: 49igstes abgespeicherte Album
- AQ1: auszuwählende Audioquelle
- AQ2: auszuwählende Audioquelle
- B: Bediener
- C1: Cover vom ersten Album
- C2: Cover vom zweiten Album
- C49: Cover vom 49igsten Album
- F1-F6: sichtbare Flächen des Würfels
- GH1: horizontale Wischgeste nach links
- GH2: horizontale Wischgeste nach rechts
- GV1: vertikale Wischgeste nach unten
- GV2: vertikale Wischgeste nach oben
- H: horizontale Achse
- K: Kraftfahrzeug
- L: Lüftersymbol
- L0: einzustellende Lüfterdrehzahl (Standard)
- L1: einzustellende Lüfterdrehzahl (erhöht)
- R: Richtung der Luftströmung
- R0: einzustellende Luftverteilung (Standard)
- S1: auszuwählender Radiosender
- T: Temperaturanzeige
- T0: einzustellende Temperatur (Standard)

- T1: erster Titel eines ausgewählten Albums
- T12: zwölfter Titel eines ausgewählten Albums
- V: vertikale Achse
- W: Würfel
- W1-W6: Würfel, welche zum Teil unterschiedlichen Funktionsbereichen zugeordnet sind

## Patentansprüche

1. Verfahren zur Ansteuerung eines Kraftfahrzeug-Komfortsystems (103), wobei die Ansteuerung mit Hilfe einer dem Komfortsystem (103) zugeordneten, berührungsempfindlichen Anzeige- und Bedienfläche (102) erfolgt, wobei in wenigstens einem Betriebsmodus auf der berührungsempfindlichen Anzeige- und Bedienfläche (102) die virtuelle Darstellung wenigstens eines dreidimensional anmutenden Körpers (W1-W6) in einer ersten Position erzeugt und auf dessen Oberfläche (F1-F6) wenigstens eine vom Komfortsystem durchführbare Funktion (A1, T1; A1, T12; A2, T1; A49, T1; L, L0; L, L1; T, T0; R, R0; AQ1; S1; AQ2) dargestellt wird, wobei der Körper (W1-W6) nach Drehung um eine horizontale oder vertikale Achse (H oder V) in eine solche, andere Position bewegt wird, in der auf dessen sichtbarer Oberfläche (F1-F6) wenigstens eine andere, vom Komfortsystem durchführbare Funktion (A1, T1; A1, T12; A2, T1; A49, T1; L, L0; L, L1; T, T0; R, R0; AQ1; S1; AQ2) dargestellt wird, **dadurch gekennzeichnet, dass** mehrere dreidimensional anmutende Körper (W1-W6) beabstandet (a) voneinander dargestellt werden, wobei einem oder mehreren Körpern (W1-W6) Funktionen aus einem Funktionsbereich (104-107) des Komfortsystems (103) zugeordnet sind, und, dass einem Körper (W4) Funktionen (S1 oder A1,T1) in Abhängigkeit der Position (F1 oder F2) wenigstens eines anderen Körpers (W1) zugeordnet werden.

2. Verfahren nach Anspruch 1, **dadurch gekennzeichnet, dass** nach Darstellung des Körpers (W1-W6) in einer bestimmten Position oder nach dem Bewegen des Körpers (W1-W6) in eine solche, das Komfortsystem (103) spätestens nach einer bestimmten Zeitverzögerung automatisch derart angesteuert wird, dass die dargestellte Funktion (A1, T1; A1, T12; A2, T1; A49, T1; L, L0; L, L1; T, T0; R, R0; AQ1; S1; AQ2) auch durchgeführt wird.

3. Verfahren nach Anspruch 1 oder 2, **dadurch gekennzeichnet, dass** mit der Drehung des Körpers (W4) um eine bestimmte Achse (V) ein bestimmter Funktionsvorrat (A1, T1-T12) mit einer ersten (A1,T1) und mit einer letzten (A1,T12) darstellbaren Funktion verbunden wird, wobei nach wiederholter Drehung des Körpers (W4) in eine bestimmte Richtung und einer damit verbundenen Darstellung der letzten (A1,T12) oder ersten (A1,T1) Funktion aus diesem Funktionsvorrat (A1, T1-T12) bei weiterer Drehung des Körpers (W4) in die gleiche Richtung wieder die erste (A1,T1) oder letzte (A1,T12) Funktion dargestellt wird.

4. Verfahren nach einem der vorhergehenden Ansprüche, **dadurch gekennzeichnet, dass** mit der Drehung des Körpers (W4) um eine erste Achse (V) als Funktionsvorrat (A1, T1-T12) die Auswahl von Titeln (T1-T12) aus einem bestimmten Musikalbum (A1) und mit der Drehung des Körpers (W4) um eine zweite Achse (H) die Auswahl eines Titels aus unterschiedlichen Musikalben (A1-A49) zur Verfügung gestellt wird.

5. Verfahren nach Anspruch 4, **dadurch gekennzeichnet, dass** die erste Achse (V) vertikal und die zweite Achse (H) horizontal ist.

6. Kraftfahrzeug (K) mit einem Komfortsystem (103) und wenigstens einer diesem zur Bedienung zugeordneten, berührungsempfindlichen Anzeige- und Bedienfläche (102), wobei die Anzeige- und Bedienfläche (102) derart ansteuerbar ist, dass auf dieser die virtuelle Darstellung wenigstens eines dreidimensional anmutenden Körpers (W1-W4) erfolgt, wobei durch Drehung des Körpers (W1-W4) um eine horizontale oder vertikale Achse (H oder V) mittels einer Wischgeste (GH oder GV) eine Auswahl von durchführbaren Funktionen (A1, T1; A1, T12; A2, T1; A49, T1; L, L0; L, L1;T, T0; R, R0; AQ1; S1; AQ2) des Komfortsystems (103) möglich ist, **dadurch gekennzeichnet, dass** mehrere dreidimensional anmutende Körper (W1-W6) beabstandet (a) voneinander dargestellt werden, wobei einem oder mehreren Körpern (W1-W6) Funktionen aus einem Funktionsbereich (104-107) des Komfortsystems (103) zugeordnet sind und einem Körper (W4) Funktionen (S1 oder A1,T1) in Abhängigkeit der Position (F1 oder F2) wenigstens eines anderen Körpers (W1) zugeordnet werden.

## Claims

1. Method for controlling a motor vehicle comfort system (103), wherein the control is carried out with the aid of a touch-sensitive display-and-operating area (102) assigned to the comfort system (103), wherein, in at least one operating mode, the virtual display of at least one body (W1-W6) of a three-dimensional appearance is generated in a first position on the touch-sensitive display-and-operating area (102) and at least one function (A1, T1; A1, T12; A2, T1; A49, T1; L, L0; L, L1; T, T0; R, R0; AQ1; S1; AQ2) that can be executed by the comfort system is displayed on the surface (F1-F6) of the body, wherein, after rotating about a horizontal or vertical axis (H or V), the body (W1-W6) is moved into another such position, in which at least one other function (A1, T1; A1, T12; A2, T1; A49, T1; L, L0; L, L1; T, T0; R, R0; AQ1; S1; AQ2) which can be executed by the comfort system is displayed on the visible surface (F1-F6) of the body, **characterized in that** a number of bodies (W1-W6) of a three-dimensional appearance are displayed at a distance (a) from one another, wherein one or more bodies (W1-W6) are assigned functions from a functional area (104-107) of the comfort system (103), and **in that** one body (W4) is assigned functions (S1 or A1, T1) in dependence on the position (F1 or F2) of at least one other body (W1).

2. Method according to Claim 1, **characterized in that**, after the body (W1-W6) is displayed in a particular position or after the body (W1-W6) is moved into such a position, at the latest after a certain time delay the comfort system (103) is automatically controlled in such a way that the displayed function (A1, T1; A1, T12; A2, T1; A49, T1; L, L0; L, L1; T, T0; R, R0; AQ1; S1; AQ2) is also executed.

3. Method according to Claim 1 or 2, **characterized in that**, with the rotation of the body (W4) about a particular axis (V), a particular store of functions (A1, T1-T12) is associated with a first (A1, T1) and with a last (A1, T12) displayable function, wherein, after repeated rotation of the body (W4) into a particular position and an associated display of the last (A1, T12) or first (A1, T1) function from this store of functions (A1, T1-T12), on further rotation of the body (W4) in the same direction the first (A1, T1) or last (A1, T12) function is displayed again.

4. Method according to one of the preceding claims, **characterized in that**, with the rotation of the body (W4) about a first axis (V), the selection of titles (T1-T12) from a particular music album (A1) is made available as a store of functions (A1, T1-T12) and, with the rotation of the body (W4) about a second axis (H), the selection of a title from different music albums (A1-A49) is made available.

5. Method according to Claim 4, **characterized in that** the first axis (V) is vertical and the second axis (H) is horizontal.

6. Motor vehicle (K) with a comfort system (103) and at least one touch-sensitive display-and-operating area (102) assigned to this system for operation, wherein the display-and-operating area (102) can be controlled in such a way that the virtual display of at least one body (W1-W4) of a three-dimensional appearance takes place on it, wherein, by rotation of the body (W1-W4) about a horizontal or vertical axis (H or V) by means of a swiping gesture (GH or GV), a selection of executable functions (A1, T1; A1, T12; A2, T1; A49, T1; L, L0; L, L1; T, T0; R, R0; AQ1; S1; AQ2) of the comfort system (103) is possible, **characterized in that** a number of bodies (W1-W6) of a three-dimensional appearance are displayed at a distance (a) from one another, wherein one or more bodies (W1-W6) are assigned functions from a functional area (104-107) of the comfort system (103) and one body (W4) is assigned functions (S1 or A1, T1) in dependence on the position (F1 or F2) of at least one other body (W1).

## Revendications

1. Procédé pour le pilotage d'un système de confort de véhicule automobile (103), dans lequel le pilotage a lieu à l'aide d'une interface tactile d'affichage et de commande (102) associée au système de confort (103), dans lequel, dans au moins un mode de fonctionnement, la représentation virtuelle d'au moins un corps (W1-W6) d'apparence tridimensionnelle est générée dans une première position sur l'interface tactile d'affichage et de commande (102) et au moins une fonction (A1, T1 ; A1, T12 ; A2, T1 ; A49, T1 ; L, L0 ; L, L1 ; T, T0 ; R, R0 ; AQ1 ; S1 ; AQ2) réalisable par le système de confort est représentée sur sa surface (F1-F6), dans lequel le corps (W1-W6) est déplacé après rotation autour d'un axe horizontal ou vertical (H ou V) dans une autre position dans laquelle au moins une autre fonction (A1, T1 ; A1, T12 ; A2, T1 ; A49, T1 ; L, L0 ; L, L1 ; T, T0 ; R, R0 ; AQ1 ; S1 ; AQ2) réalisable par le système de confort est représentée sur sa surface visible (F1-F6), **caractérisé en ce que** plusieurs corps (W1-W6) d'apparence tridimensionnelle sont représentés espacés (a) les uns des autres, des fonctions d'une gamme de fonctions (104-107) du système de confort (103) étant associées à un ou plusieurs corps (W1-W6), et **en ce que** des fonctions (S1 ou A1, T1) sont associées à un corps (W4) en fonction de la position (F1 ou F2) d'au moins un autre corps (W1).

2. Procédé selon la revendication 1, **caractérisé en ce qu'**après la représentation du corps (W1-W6) dans une position déterminée ou après le déplacement du corps (W1-W6) dans une telle position, le système de confort (103) est piloté automatiquement au plus tard après un délai temporel déterminé de telle sorte que la fonction représentée (A1, T1 ; A1, T12 ; A2, T1 ; A49, T1 ; L, L0 ; L, L1 ; T, T0 ; R, R0 ; AQ1 ; S1 ; AQ2) soit également réalisée.

3. Procédé selon la revendication 1 ou 2, **caractérisé en ce qu'**un réservoir de fonctions déterminé (A1, T1-T12) avec une première (A1, T1) et avec une dernière (A1, T12) fonction représentable est relié avec la rotation du corps (W4) autour d'un axe déterminé (V), dans lequel, après une rotation répétée du corps (W4) dans une direction déterminée et une représentation reliée avec celle-ci de la dernière (A1, T12) ou première (A1, T1) fonction de ce réservoir de fonctions (A1, T1-T12), lors d'une rotation supplémentaire du corps (W4) dans la même direction, la première (A1, T1) ou dernière (A1, T12) fonction est de nouveau représentée.

4. Procédé selon l'une quelconque des revendications précédentes, **caractérisé en ce qu'**avec la rotation du corps (W4) autour d'un premier axe (V), en tant que réservoir de fonctions (A1, T1-T12), le choix de titres (T1-T12) à partir d'un album musical déterminé (A1) est mis à disposition et, avec la rotation du corps (W4) autour d'un deuxième axe (H), le choix d'un titre à partir de différents albums musicaux (A1-A49) est mis à disposition.

5. Procédé selon la revendication 4, **caractérisé en ce que** le premier axe (V) est vertical et le deuxième axe (H) est horizontal.

6. Véhicule automobile (K) muni d'un système de confort (103) et d'au moins une interface tactile d'affichage et de commande (102) associée à celui-ci pour la commande, dans lequel l'interface d'affichage et de commande (102) peut être pilotée de telle sorte que la représentation virtuelle d'au moins un corps (W1-W4) d'apparence tridimensionnel ait lieu sur celle-ci, dans lequel, par rotation du corps (W1-W4) autour d'un axe horizontal ou vertical (H ou V) au moyen d'un geste de balayage (GH ou GV), un choix de fonctions réalisables (A1, T1 ; A1, T12 ; A2, T1 ; A49, T1 ; L, L0 ; L, L1 ; T, T0 ; R, R0 ; AQ1 ; S1 ; AQ2) du système de confort (103) est possible, **caractérisé en ce que** plusieurs corps (W1-W6) d'apparence tridimensionnelle sont représentés espacés (a) les uns des autres, des fonctions d'une gamme de fonctions (104-107) du système de confort (103) étant associées à un ou plusieurs corps (W1-W6), et des fonctions (S1 ou A1, T1) étant associées à un corps (W4) en fonction de la position (F1 ou F2) d'au moins un autre corps (W1).
